# EUROPEAN PATENT APPLICATION

(11) **EP 3 264 792 A1**
(43) Date of publication of application: **03.01.2018**
(21) Application number: 15882514.1
(22) Date of filing: 16.11.2015
(51) Int. Cl.: H04R 3/00, B60R 11/02, H04R 1/40, H04R 3/02, H04R 1/02, H04L 7/00, H04M 9/08, G06F 9/50

(54) **VEHICLE-MOUNTED SOUND PROCESSING DEVICE**

(30) Priority: 16.02.2015 JP 2015027529
(71) Applicant: Panasonic Intellectual Property Management Co., Ltd., Osaka-shi, Osaka 540-6207 (JP)
(72) Inventor: OGURA, Hiroshi, Osaka-shi, Osaka (JP); TAKEUCHI, Yusuke, Osaka-shi, Osaka (JP); FURUKAWA, Hiroki, Osaka-shi, Osaka (JP); KANAMORI, Takeo, Osaka-shi, Osaka (JP); YUZURIHA, Shinichi, Osaka-shi, Osaka (JP)
(74) Representative: Schwabe - Sandmair - Marx
(86) International application number: PCT/JP2015/005697
(87) International publication number: WO 2016/132409

(57) **Abstract**

Provided is a vehicle-mounted sound processing device for improving the accuracy of processing of sounds collected in a vehicle interior room. The vehicle-mounted sound processing device comprises: a microphone module disposed in the vehicle interior room; and a head-unit disposed separately from the microphone module in the vehicle interior room. The microphone module comprises: a plurality of sound conversion elements that convert input voice signals to electric signals; and a sensitivity correction unit that corrects variations of sensitivity between the plurality of sound conversion elements for the signals input from the plurality of sound conversion elements. The signals as processed by the sensitivity correction unit are output to the head-unit.

## Description

### Technical Field

The present invention relates to an in-vehicle acoustic processing apparatus which is used for hands-free call or voice recognition in the interior of an automobile.

### Background Art

Voice recognition used for hands-free call or in-vehicle navigation for destination search and the like in the interior of the automobile acoustic is performed with an in-vehicle acoustic processing apparatus including an acoustic conversion device. However, a sound pressure which is taken into an acoustic conversion device contains noises of the interior of the vehicle such as a blower sound (wind noise) of the air-conditioner, an engine sound, a travelling noise in addition to a voice of a speaking person such as a driver and a fellow passenger of a seat other than the driver's seat. Consequently, during hands-free call, the receiver of the call hears the voice of the speaking person mixed with the noise, and therefore it is difficult to make favorable conversation. In addition, regarding the voice recognition, the rate of the voice recognition is reduced.

To solve such a problem, the following techniques are proposed, for example. For example, PTLS 1 and 2 disclose techniques for improving the voice recognition rate by collecting the output voice, and by estimating the position of the speaking person. In addition, for example, PTLS 2 and 3 disclose techniques for reducing noise such as wind noise by use of a voice signal processing technique. In addition, for example, PTL 4 discloses a method for mounting a microphone module which can prevent mixture of noise.

### Citation List

### Patent Literature

PTL 1
   Japanese Patent Application Laid-Open No. 2001-13994
PTL 2
   Japanese Patent Application Laid-Open No. 2010-283506
PTL 3
   Japanese Patent Publication No. 3146804
PTL 4
   Japanese Patent Publication No. 3936154

### Summary of Invention

### Technical Problem

An in-vehicle acoustic processing apparatus is known in which a microphone module is disposed at a position near the speaking person in order to accurately collect a voice of the speaking person, and a head unit provided separately from a plurality of microphone modules performs processing of a voice input to the microphone module. However, the noise in the interior of a vehicle differs depending on the positions. Therefore, a sound input to the microphone module can contain a large amount of noise depending on its position, and as a result the accuracy of the voice processing is disadvantageously reduced. PTLS 1 to 4 do not disclose a configuration for solving such a problem.

An object of the present invention is to provide an in-vehicle acoustic processing apparatus which can improve the accuracy of processing on a voice collected in the interior of a vehicle.

### Solution to Problem

An in-vehicle acoustic processing apparatus according to an aspect of the present invention includes: a microphone module installed in an interior of an vehicle; and a head unit disposed at a position separated from the microphone module in the interior of the vehicle. The microphone module includes a plurality of acoustic conversion devices that convert a received voice signal into an electric signal, and a sensitivity correction section that performs, on a signal received from the acoustic conversion devices, correction of non-uniformity in sensitivity among the acoustic conversion devices, and a signal processed by the sensitivity correction section is output to the head unit.

### Advantageous Effects of Invention

According to the present invention, it is possible to provide an in-vehicle acoustic processing apparatus which can improve the accuracy of processing on a voice collected in the interior of a vehicle.

### Brief Description of Drawings

FIG. 1 is a schematic view illustrating an interior of a vehicle in which an in-vehicle acoustic processing apparatus according to an embodiment of the present invention is mounted;
FIG. 2 is a schematic view illustrating the interior of the vehicle in which the in-vehicle acoustic processing apparatus according to the embodiment of the present invention is mounted;
FIG. 3A is a perspective view illustrating a configuration of a microphone module according to the embodiment of the present invention;
FIG. 3B is a sectional view illustrating a configuration of the microphone module according to the embodiment of the present invention;
FIG. 4 illustrates a function of voice signal processing of the in-vehicle acoustic processing apparatus according to the embodiment of the present invention;
FIG. 5 illustrates sharing of functions of the voice signal processing according to the embodiment of the present invention;
FIG. 6 is illustrates differences in throughput of DSP among function layouts of the microphone module and the head unit according to the embodiment of the present invention; and
FIG. 7 is a schematic view of the in-vehicle acoustic processing apparatus according to the embodiment of the present invention.

### Description of Embodiment

An embodiment of the present invention is described below with reference to the drawings.

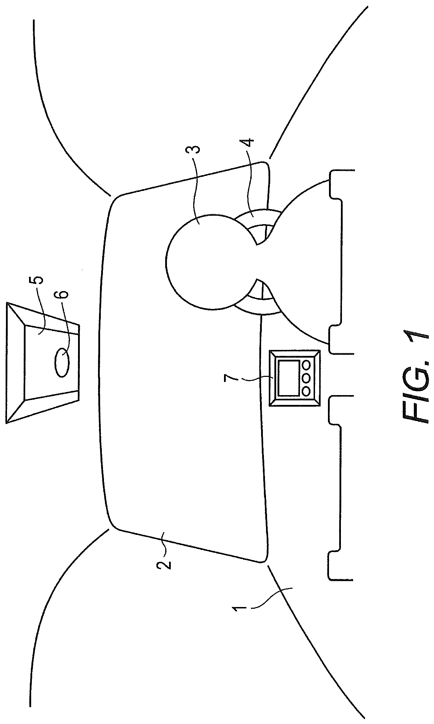

First, an installation example of an in-vehicle acoustic processing apparatus according to the present embodiment is described with reference to FIG. 1. FIG. 1 is a schematic view illustrating an interior of a vehicle in which the in-vehicle acoustic processing apparatus according to the present embodiment is mounted. It is to be noted that while FIG. 1 illustrates a vehicle with right-hand drive for convenience of description, the vehicle in which the in-vehicle acoustic processing apparatus according to the present embodiment is mounted may also be a vehicle with left-hand drive. In addition, while the vehicle is an automobile in the present embodiment, the vehicle is not limited to an automobile.

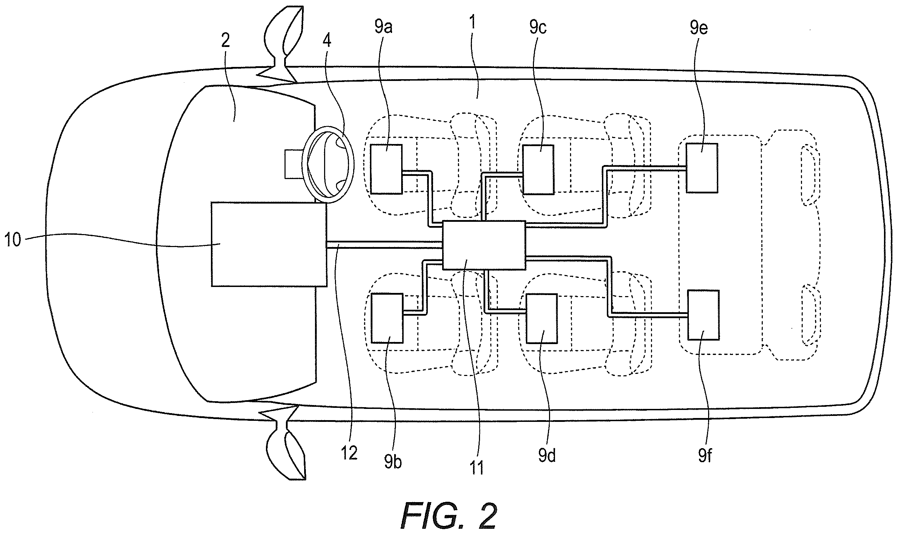

As illustrated in FIG. 1, vehicle 1 includes windshield 2, steering wheel 4, over-head console (OHC) 5, and head unit 7. Over-head console 5 is disposed at the upper left of driver 3, that is, at a center portion on the front side on the ceiling in the interior of vehicle 1. Over-head console 5 is provided with pressure entrance hole 6 into which a sound pressure such as a voice of a passenger (such as a driver and a fellow passenger) of vehicle 1 enters. A microphone module described later (see FIGS. 2 to 3) is disposed on the rear side of sound pressure entrance hole 6.

Head unit 7 forms the in-vehicle acoustic processing apparatus according to the present embodiment together with the microphone module. Head unit 7 is disposed at a front portion of the driver's seat, and connected with the microphone module with an electric line (not illustrated). Head unit 7 receives a voice signal output from the microphone module.

In the in-vehicle acoustic processing apparatus according to the present embodiment, the microphone module and the head unit are separated from each other, and the microphone module is disposed on the ceiling of the interior of the vehicle. Since the distance between a speaking person (passenger) and the microphone module is small, the above-mentioned configuration can facilitate the performance of the microphone module in comparison with a configuration in which the microphone module is incorporated in the head unit. For example, when the distance between the microphone module and the speaking person is tripled, the S/N ratio of the microphone module is deteriorated by approximately 10 dB (deteriorated in proportion to the logarithm of the distance). In view of this, it is preferable to set the distance between the microphone module and the speaking person to a small value as much as possible, and, from a practical standpoint, it is more preferable to dispose the microphone module on the ceiling in the interior of the vehicle.

While the microphone module is installed in over-head console 5 in FIG. 1, the microphone module may be embedded in the ceiling of vehicle 1. Also with this configuration, the microphone module can be disposed at a position near the speaking person. FIG. 2 illustrates an example configuration in which the microphone module is embedded in the ceiling of vehicle.

As illustrated in FIG. 2, vehicle 1 includes microphone modules 9a to 9f, head unit 10, relaying module 11, and electric line 12. As with FIG. 1, head unit 10 may be disposed at a front portion of the driver's seat, or disposed on the ceiling of the interior of vehicle 1. Relaying module 11 is an apparatus for relay between head unit 10 and microphone modules 9a to 9f. In addition, microphone modules 9a to 9f provided in the proximity of respective seats are connected with relaying module 11 through electric line 12. In addition, relaying module 11 is connected with head unit 10 through electric line 12. With this configuration, in the example illustrated in FIG. 2, voices received at microphone modules 9a to 9f are output to head unit 10 through relaying module 11 in the form of voice signals.

The transmission scheme of electric line 12 between microphone modules 9a to 9f and head unit 10 may be an analog transmission scheme, or a digital transmission scheme. It should be noted that in the case where a plurality of microphone modules are provided as illustrated in FIG. 2, or the case where two or more acoustic devices are provided in the microphone module, it is desirable to use a digital transmission scheme since, in the above-mentioned cases, signal multiplexing can be achieved with a digital transmission scheme. In addition, with use of a digital transmission scheme, clocks can be substantially synchronized between the microphone module and the head unit when echo cancelling is performed as described later, and the performance of the in-vehicle acoustic processing apparatus can be increased in comparison with analog transmission.

I2S, CXPI, LIN, CAN, FlexRay, MOST, IEEE1394 (so-called "FireWire" (registered trademark)), LVDS, USB and the like are desirable as the digital transmission scheme since the above-mentioned schemes are generally used for in-vehicle LAN.

In addition, in the case where a multiplex transmission scheme (signal multiplexing) is used for exchanging digital signals between microphone modules 9a to 9f and head unit 10, the number of the lines can be reduced even when a large number of acoustic conversion devices or microphone modules are used. As a result, the cost of the lines required for mounting the in-vehicle acoustic processing apparatus to the vehicle can be advantageously reduced.

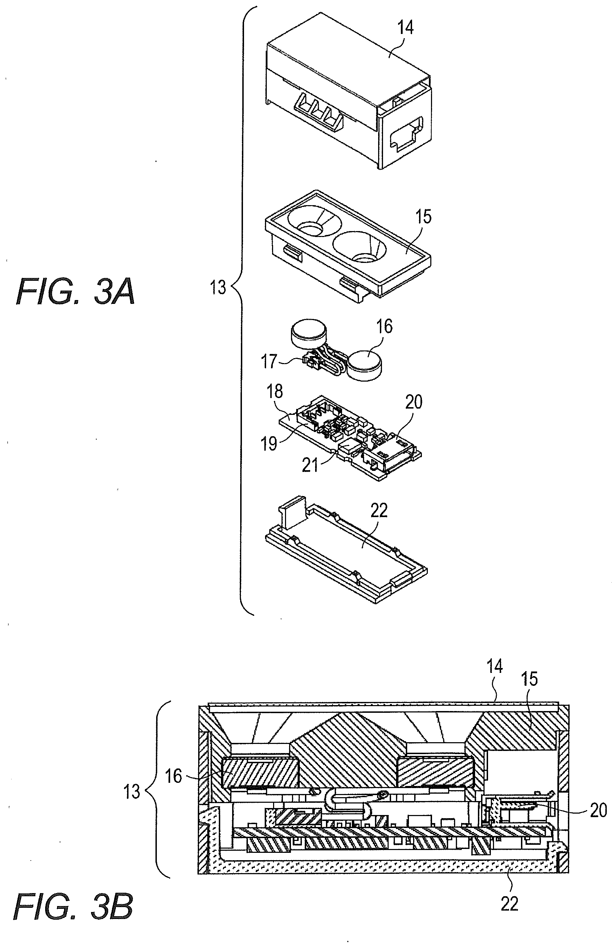

Next, an example configuration of the microphone module described with reference to FIG. 1 and FIG. 2 is described with reference to FIG. 3A and FIG. 3B. FIG. 3A is a perspective view illustrating a configuration of the microphone module, and FIG. 3B is a sectional view illustrating a configuration of the microphone module.

In FIG. 3A, microphone module 13 includes upper case 14. A veil for preventing entrance of foreign matters and the like may be disposed on the top surface of upper case 14. In addition, microphone module 13 includes holder 15 that holds the acoustic conversion device, and acoustic conversion device 16. While two acoustic conversion devices 16 are illustrated in FIG. 3A and FIG. 3B, the number of acoustic conversion devices 16 is not limited to two, and two or more acoustic conversion devices 16 may be provided.

In addition, while microphone module 13 illustrated in FIG. 3A and FIG. 3B is an electret capacitor condenser microphone (ECM), microphone module 13 may be of another type such as an acoustic conversion device called MEMS microphone.

In addition, microphone module 13 includes connector 17, circuit board 18, connector 19, connector 20, electric electronic component 21, and bottom case 22. Connector 17 is configured to connect acoustic conversion device 16 to circuit board 18. Connector 19 is provided on circuit board 18, and configured for connection of connector 17. Connector 20 is configured for outputting an electric signal from microphone module 13. A plurality of electric electronic components 21 are configured to convert a voice signal (sound pressure) input to acoustic conversion device 16, into an electric signal. Electric electronic component 21 includes a digital signal processor (DSP) that performs an acoustic signal process.

It is to be noted that the format of the output of connector 20 is not limited, and may be analog output or digital output. In addition, connector 20 may be omitted such that a line for outputting an electric signal is directly connected or joined from circuit board 18.

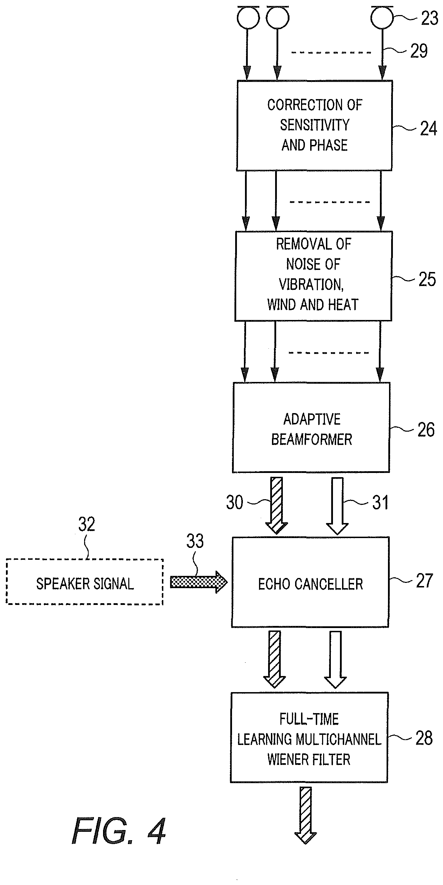

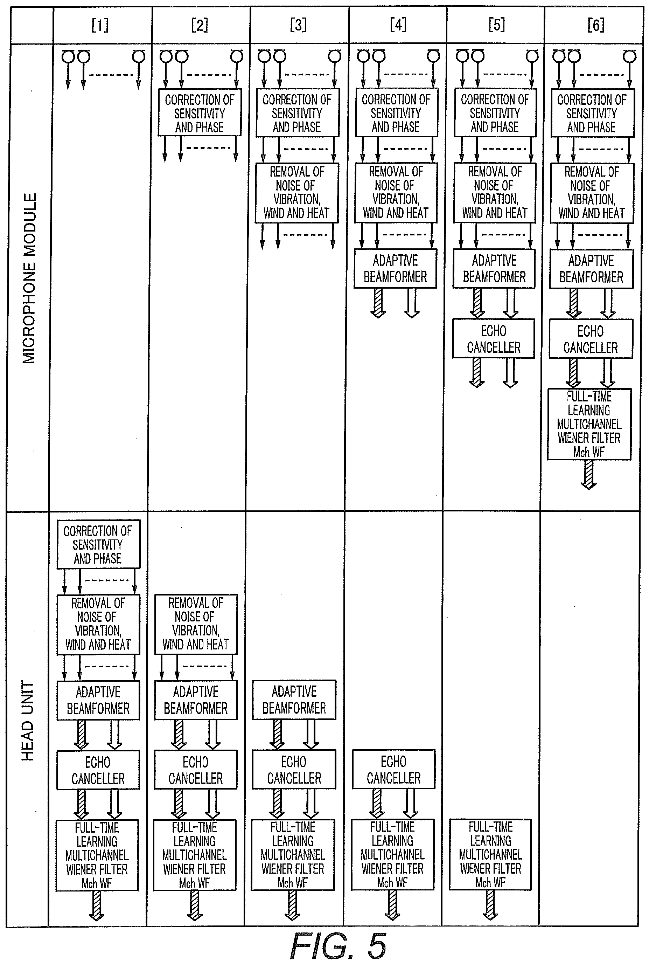

Next, a voice signal processing of the in-vehicle acoustic processing apparatus according to the present embodiment is described with reference to FIG. 4. FIG. 4 illustrates a function of the voice signal processing of the in-vehicle acoustic processing apparatus. Each of the functions denoted with the reference numerals 23 to 28 illustrated in FIG. 4 is provided in the microphone module or the head unit as illustrated with FIG. 5 described later.

As illustrated in FIG. 4, the microphone module includes a plurality of acoustic conversion devices 23. Acoustic conversion devices 23 receive a voice signal (for example, a mixed sound of noise and a voice of a speaking person), and convert the voice signal into an electric signal.

Sensitivity correction function 24 (which is also referred to as sensitivity correction section) corrects non-uniformity of the sensitivity or the phase of signals received from a plurality of acoustic conversion devices 23, among acoustic conversion devices 23. It is to be noted that, in FIG. 4 and FIG. 5, sensitivity correction function 24 is illustrated as "correction of sensitivity and phase."

Noise removal function 25 (which is also referred to as noise removal section) performs non-correlative component extraction on a signal received from sensitivity correction function 24, and reduces and removes noise of wind, vibration, heat and the like. It is to be noted that, in FIG. 4 and FIG. 5, noise removal function 25 is illustrated as "removal of noise of vibration, wind and heat."

Adaptive beamformer 26 (which is also referred to as adaptive beamformer section) performs a spatial separation of a sound by a directivity control on a signal received from noise removal function 25.

Echo canceller 27 (which is also referred to as echo canceller section) performs, on a signal received from adaptive beamformer 26, separation of an echo and a voice of a speaking person during a hands-free call for example. When echo cancelling is performed, a speaker signal is required, and therefore speaker signal 32 is input to echo canceller 27.

Full-time learning multichannel Wiener filter (Mch WF) 28 performs linear or nonlinear computation on a signal received from echo canceller 27 to separate the sound.

In addition, in FIG. 4, the reference numerals 29, 30, 31 and 33 denote electric signals. The reference numeral 29 represents a mixed signal of an object sound (such as a voice of the speaking person) and noise. The reference numeral 30 represents a signal containing a large amount of an object sound. The reference numeral 31 represents a signal containing a large amount of noise. The reference numeral 33 represents a signal input from a speaker.

Next, sharing of the functions of the voice signal processing is described. FIG. 5 illustrates a configuration in which the functions of the voice signal processing illustrated in FIG. 4 are shared by the microphone module and the head unit. FIG. 5 illustrates examples of six types [1] to [6] of sharing of the functions.

In FIG. 5, [1] corresponds to a configuration in which only a plurality of acoustic conversion devices are mounted in the microphone module, and sensitivity correction function 24 to full-time learning multichannel Wiener filter 28 illustrated in FIG. 4 are mounted in the head unit. The function layout (function allocation) of [1] is commercially available as the function layout of an in-vehicle acoustic processing apparatus.

In FIG. 5, [2] to [6] correspond to respective configurations in which at least one of sensitivity correction function 24 to full-time learning multichannel Wiener filter 28 illustrated in FIG. 4 is mounted in the microphone module.

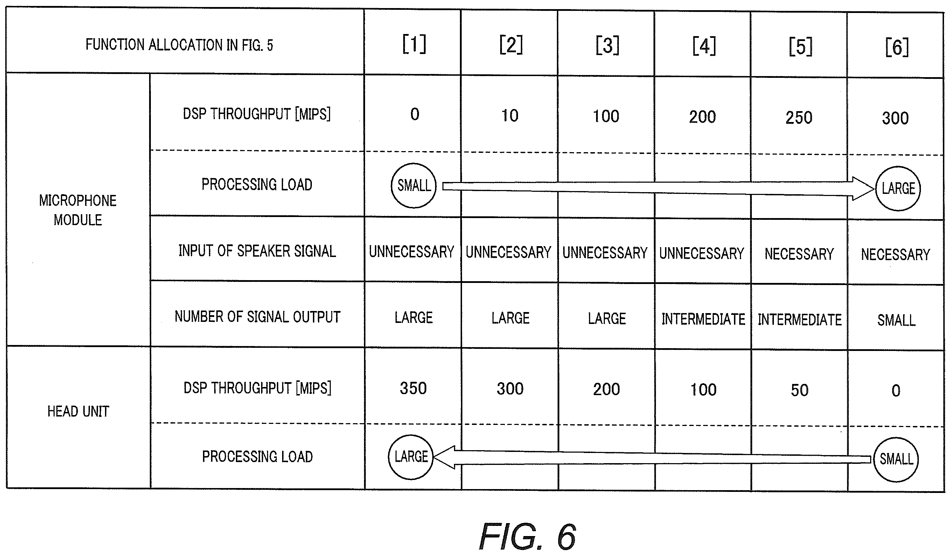

The in-vehicle acoustic processing apparatus according to the present embodiment employs any of the function layouts of [2] to [6] of FIG. 5. Selection from the function layouts of [2] to [6] is made in consideration of the conditions illustrated in FIG. 6.

Next, conditions which are taken into consideration for selection of the function layouts are described with reference to FIG. 6. FIG. 6 illustrates differences in throughput of DSP among the function layouts of [1] to [6] shown in FIG. 5, and illustrates whether input of a speaker signal to the microphone module is required or not (see FIG. 4). In FIG. 6, [MIPS] is the unit representing the processing ability of DSP and is an abbreviation of "Million Instructions Per Second." It is to be noted that the values of the MIPS of [1] to [6] shown in FIG. 6 are rough estimate values obtained by use of a common DSP, and the values are not limitative.

In FIG. 6, the DSP processing load of the microphone module is smallest in [1], and largest in [6]. On the other hand, the processing load of head unit DSP is largest in [1], and smallest in [6]. In addition, input of a speaker signal to the microphone module is unnecessary in [1] to [4], but necessary in [5] and [6]. In addition, the number of output signals of the microphone module is large in [1] to [3], and small in [4] and [5] relative to [1] to [3], and, minimized in [6] (see the number of output signals in FIG. 5 (the number of arrows)). The number of inputs of the head unit that receives a signal of the microphone module change in accordance with the number of output of the microphone module of [1] to [6].

The function layout of the microphone module and the head unit to be mounted in the vehicle is determined in consideration of conditions of mounting to the vehicle, and the conditions of FIG. 6.

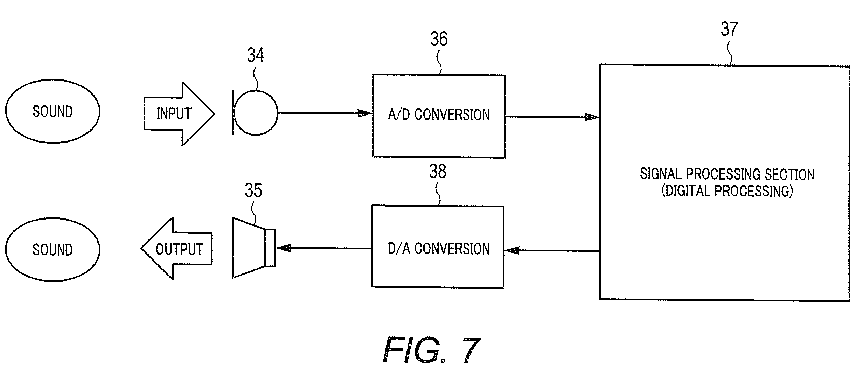

Next, a method for performing the echo canceller function without causing failure in the present example is described with reference to FIG. 7.

FIG. 7 is a schematic view of an in-vehicle acoustic processing apparatus in which a sound (sound pressure) is input to the microphone module and output from a speaker. In FIG. 7, the reference numeral 34 represents an acoustic conversion device itself or the microphone module, the reference numeral 35 a speaker, the reference numeral 36 an A/D convertor that converts an analog signal received by microphone module 34 into a digital vibration, the reference numeral 37 a signal processing section that performs a digital signal processing, and the reference numeral 38 a D/A convertor that converts a digital signal into an analog signal. In the drawing, the arrows indicate a flow of an electric signal. An analog signal is output in the form of a sound from speaker 35.

FIG. 7 illustrates an operation in which a voice, which is an analog signal or the like, is once converted into a digital signal (A/D conversion), and a resulting signal of the digital signal processing is converted into an analog signal (D/A conversion). A sampling clock is used for the conversion operation of the analog input output apparatus (A/D converter 36 and D/A convertor 38); however, in some situation, the sampling clocks are different among the apparatuses. In view of this, the clock difference is required to be compensated by performing clock synchronization, or by again performing a sampling processing on the transmitted digital signal. When the sampling frequency is high, clock synchronization via a transmission path such as a cable is difficult to be performed, and therefore an asynchronous communication method is used in digital signal connection in some situation. When sampling is again performed on the digital signal transmitted by asynchronous communication, a method using over sampling may be employed to obtain data of another clock in an asynchronous manner from the already digitized signal.

It is possible to operate the echo canceller function without causing failure by performing clock synchronization among analog input output apparatuses, or by compensating clock difference in the above-mentioned manner.

As described above, according to the present embodiment, the microphone module and the head unit are configured with any of the function layouts [2] to [6] illustrated in FIG. 5, and therefore the accuracy of the processing performed on a voice collected in the interior of the vehicle does not depend on the installation position of the microphone module. Thus, with the present embodiment, the accuracy of the processing performed on a voice collected in the interior of the vehicle can be improved.

The disclosure of the specification, drawings, and abstract in Japanese Patent Application No. 2015-027529 filed on February 16, 2015 is incorporated herein by reference in its entirety.

### Industrial Applicability

The present invention is applicable to in-vehicle acoustic processing apparatuses which are used for hands-free call or voice recognition in the interior of the automobile.

### Reference Signs List

1 Vehicle
2 Windshield
3 Driver
4 Steering wheel
5 Over-head console
6 Sound pressure entrance hole
7, 10 Head unit
9a, 9b, 9c, 9d, 9e, 9f, 13 Microphone module
11 Relaying module
12 Electric line
14 Upper case
15 Holder
16, 23 Acoustic conversion device
17, 19, 20 Connector
18 Circuit board
21 Electric electronic component
22 Bottom case
24 Sensitivity correction function
25 Noise removal function
26 Adaptive beamformer
27 Echo canceller
28 Full-time learning multichannel Wiener filter
29, 30, 31, 33 Electric signal
32 Speaker signal
34 Acoustic conversion device or microphone module
35 Speaker
36 A/D convertor
37 Signal processing section
38 D/A convertor

## Claims

1. An in-vehicle acoustic processing apparatus comprising:
a microphone module installed in an interior of an vehicle; and
a head unit disposed at a position separated from the microphone module in the interior of the vehicle, wherein
the microphone module includes
a plurality of acoustic conversion devices that convert a received voice signal into an electric signal, and
a sensitivity correction section that performs, on a signal received from the acoustic conversion devices, correction of non-uniformity in sensitivity among the acoustic conversion devices, and
a signal processed by the sensitivity correction section is output to the head unit.

2. The in-vehicle acoustic processing apparatus according to claim 1, wherein
the microphone module further includes a noise removal section that removes a noise component from the signal processed by the sensitivity correction section, and
a signal processed by the noise removal section is output to the head unit.

3. The in-vehicle acoustic processing apparatus according to claim 2, wherein
the microphone module further includes an adaptive beamformer section that performs, on the signal processed by the noise removal section, a spatial separation of a sound by a directivity control, and
a signal processed by the adaptive beamformer section is output to the head unit.

4. The in-vehicle acoustic processing apparatus according to claim 3, wherein
the microphone module further includes an echo canceller section that performs a separation of an echo and a voice on the signal processed by the adaptive beamformer section, and
a signal processed by the echo canceller section is output to the head unit.

5. The in-vehicle acoustic processing apparatus according to claim 4, wherein
the microphone module further includes a full-time learning multichannel Wiener filter that performs linear or nonlinear computation on the signal processed by the echo canceller section, and
a signal processed by the full-time learning multichannel Wiener filter is output to the head unit.

6. The in-vehicle acoustic processing apparatus according to claim 1, wherein a connector for digital transmission output is mounted on a circuit board of the microphone module.

7. The in-vehicle acoustic processing apparatus according to claim 1, wherein a line cable for digital transmission is mounted on a circuit board of the microphone module.

8. The in-vehicle acoustic processing apparatus according to claim 1, wherein the microphone module is mounted in an over-head console or on a ceiling in the interior of the vehicle.

9. The in-vehicle acoustic processing apparatus according to claim 1, wherein
the head unit includes:
a noise removal section that removes a noise component from a signal received from the microphone module;
an adaptive beamformer section that performs, on a signal processed by the noise removal section, a spatial separation of a sound by a directivity control;
an echo canceller section that performs a separation of an echo and a voice on a signal processed by the adaptive beamformer section; and
a full-time learning multichannel Wiener filter that performs linear or nonlinear computation on a signal processed by the echo canceller section.

10. The in-vehicle acoustic processing apparatus according to claim 2, wherein
the head unit further includes:
an adaptive beamformer section that performs, on a signal received from the microphone module, a spatial separation of a sound by a directivity control;
an echo canceller section that performs a separation of an echo and a voice on a signal processed by the adaptive beamformer section; and
a full-time learning multichannel Wiener filter that performs linear or nonlinear computation on a signal processed by the echo canceller section.

11. The in-vehicle acoustic processing apparatus according to claim 3, wherein
the head unit includes:
an echo canceller section that performs, on a signal received from the microphone module, a separation of an echo and a voice; and
a full-time learning multichannel Wiener filter that performs linear or nonlinear computation on a signal processed by the echo canceller section.

12. The in-vehicle acoustic processing apparatus according to claim 4, wherein the head unit includes a full-time learning multichannel Wiener filter that performs linear or nonlinear computation on a signal received from the microphone module.

13. The in-vehicle acoustic processing apparatus according to claim 1, wherein a signal exchanged between the microphone module and the head unit is an analog signal.

14. The in-vehicle acoustic processing apparatus according to claim 1, wherein a signal exchanged between the microphone module and the head unit is a digital signal.

15. The in-vehicle acoustic processing apparatus according to claim 14, wherein the signal exchanged between the microphone module and the head unit is transmitted by a multiplex transmission scheme.

16. The in-vehicle acoustic processing apparatus according to claim 14, wherein, in a process of inputting and outputting a signal between the microphone module and the head unit, clock synchronization is performed, or, clock difference is compensated.
